# EUROPÄISCHE PATENTSCHRIFT

(11) **EP 4 249 136 B1**
(45) Veröffentlichungstag und Bekanntmachung des Hinweises auf die Patenterteilung: **22.01.2025**
(21) Anmeldenummer: 23156324.8
(22) Anmeldetag: 13.02.2023
(51) Int. Cl.: B07B 1/34, B07B 1/46, C05F 11/00

(54) **VERFAHREN ZUR GEWINNUNG EINES FEINKRÜMELIGEN KULTURSUBSTRATS**
METHOD FOR OBTAINING A FINE-VEGETABLE CULTURE SUBSTRATE
PROCEDE D'OBTENTION D'UN SUBSTRAT DE CULTURE A FINES PARTICULES

(30) Priorität: 23.03.2022 DE 102022106905
(43) Veröffentlichungstag der Anmeldung: 27.09.2023
(73) Patentinhaber: Müller, Jörg K., 48145 Münster (DE)
(72) Erfinder: Müller, Jörg K., 48145 Münster (DE)
(74) Vertreter: Cohausz Hannig Borkowski Wißgott

(56) Entgegenhaltungen:
- AT-B- 401 358
- DE-A1- 19 623 358
- DE-B3- 102019 214 864
- DE-B4- 10 111 300
- DE-U1- 20 218 820
- US-A1- 2017 151 585
- ALI MUHAMMAD ED - HARTE ANNETTE ET AL: "An investigation into the uses of trommel fines produced from recycling of construction and demolition waste", CONSTRUCTION AND BUILDING MATERIALS, ELSEVIER, NETHERLANDS, vol. 369, 2 February 2023 (2023-02-02), XP087270738, ISSN: 0950-0618, [retrieved on 20230202], DOI: 10.1016/J.CONBUILDMAT.2023.130579

## Beschreibung

Die Erfindung betrifft ein Verfahren zur Gewinnung eines feinkrümeligen Kultursubstrats für die Herstellung von Blumen- oder Pflanzenerde, wobei die Gewinnung aus einem Inputmaterial in Form von Bodenaushub einer Bodendeponie oder Baugrube erfolgt und das Inputmaterial mineralische und organische Bestandteile aufweist.

Des Weiteren betrifft die Erfindung die Verwendung des gewonnenen Kultursubstrats für die Herstellung von Blumen- oder Pflanzenerde oder für die Ausbringung auf einem oder Einbringung in einen Kulturboden im Garten- und Landschaftsbau oder in der Landwirtschaft mithin ein Verfahren zur Herstellung von Blumen- oder Pflanzenerde oder eines verbesserten Kulturbodens, bei dem zunächst das feinkrümelige Kultursubstrat aus dem Inputmaterial gewonnen und dieses anschließend als Zuschlagstoff zur Herstellung der Blumen- oder Pflanzenerde oder des verbesserten Kulturbodens verwendet wird.

Neben Luft und Wasser ist besonders Mutterboden eine wichtige Lebensgrundlage für Pflanzen, Tiere und Menschen und daher eine wertvolle, endliche Ressource. Mutterboden ist jedoch durch Erosion, Versiegelung, Eintrag von Schad- und Giftstoffen und durch Raubbau gefährdet.

Bodenmaterialien aus Baumaßnahmen gelten bisher in Deutschland als Abfall und deshalb nach heutigem "Wissenstand" für die Wiederverwendung im Wirtschaftskreislauf als ungeeignet. Dies hat zur Folge, dass bei Baumaßnahmen im Tief-, Straßen-, Kanal-, Garten- und Landschaftsbau anfallender Bodenaushub, insbesondere Erdaushub, der nicht unmittelbar zum Verfüllen von Gruben an anderer Stelle oder zur Aufschüttung von Wällen z.B. zum Sicht- und/ oder Schallschutz einer Wohnungsanlage verwendet werden kann, zwangsläufig auf Bodendeponien entsorgt wird. In vielen Teilen Deutschlands ist deshalb der Deponieraum knapp. Es zeigt sich jedoch, dass ein Großteil dieses ausgehobenen und/ oder deponierten Bodens für weitere Verwendungswecke geeignet ist, jedenfalls sofern er unbelastet ist, d.h. nicht durch für Mensch oder Tier gefährliche Giftstoffe kontaminiert ist. Es sei in diesem Zusammenhang angemerkt, dass eine Bodendeponie speziell der Endlagerung von Bodenaushub (Erdaushub) dient und keinen Müll enthält, d.h. von einer Mülldeponie zu unterscheiden ist.

So kann sich ein Boden einer Bodendeponie, der reich an mineralischen und organischen Bestandteilen ist, durchaus noch für einen Einsatz in der Landwirtschaft, insbesondere im Ackerbau, und im Garten- und Landschaftsbau, einschließlich Hobbygärten eignen und damit wirtschaftlich wieder nutzbar gemacht werden. Voraussetzung hierfür ist allerdings eine geeignete mechanische Aufbereitung des Bodens, da sich dieser aufgrund seiner Beschaffenheit, insbesondere aufgrund von darin enthaltenen Steinen, nicht direkt hierfür eignet.

Aus der internationalen Anmeldung WO 9748503 A1 ist eine Siebanlage zur Auftrennung eines Partikelstroms in zwei Partikelgrößen bekannt. Sie verwendet eine in Gestalt einer Treppe geneigte Siebfläche mit an den Treppenstufenkanten angeordneten Löchern. In einer Ausführungsvariante (Fig. 19) sind zwei derartige Siebflächen übereinander angeordnet, so dass drei Partikelströme erhalten werden.

Aus der Schrift DE20205891 U1 sind Wellen für einen Schaufelseparator bekannt.

Die deutsche Patentschrift DE 41 21 584 C1 beschreibt koaxiale Ringsiebabschnitte mit unterschiedlichen Lochgrößen, die einerseits axial nebeneinander, andererseits aber auch koaxial ineinander angeordnet sind, so dass das Inputmaterial in mehrere Partikelströme aufgeteilt wird und bestimmte Partikelströme zweimal gesiebt werden.

Ferner offenbart die deutsche Gebrauchsmusterschrift DE 202 18 820 U1 ein Verfahren zur Gewinnung von Material einer bestimmten Teilchengröße aus Abfallmaterial, das einer Absiebvorrichtung zugeführt wird und darin dann über eine in Arbeitsrichtung abwärts gerichtete, schwingende Siebfläche transportiert wird, die einen ersten Siebbereich mit einer ersten Maschenweite und einen in Arbeitsrichtung dahinter liegenden zweiten Siebbereich mit einer zweiten Maschenweite umfasst, deren Maschen eine geringere Abmessung als die Maschen der ersten Maschenweite haben. Allerdings wird bei diesem Verfahren kein Bodenaushub verwendet.

Es ist Aufgabe der vorliegenden Erfindung, ein einfacheres Verfahren bereitzustellen, das die Gewinnung eines feinkrümeligen Kultursubstrats aus Bodenaushub zum Gegenstand hat, das zu Mutterboden vergleichbare Kultivierungseigenschaften hat und sich zur Herstellung von Blumen- oder Pflanzenerde oder für die Ausbringung auf einem Kulturboden oder Einbringung in einen Kulturboden der Landwirtschaft, insbesondere im Ackerbau, und im Garten- und Landschaftsbau eignet und dafür auch verwendet wird.

Diese Aufgabe wird durch den Gegenstand des Anspruchs 1 gelöst. Vorteilhafte Weiterbildungen sind in den Unteransprüchen angegeben und werden nachfolgend beschrieben.

Der Kerngedanke der Erfindung besteht darin, die Gewinnung des Kultursubstrats durch Siebung des Inputmaterials bzw. Bodenaushubs zu erreichen, so dass das feinkrümelige Kultursubstrat eine Kornverteilung von 0 bis 2mm besitzt. Insoweit bedeutet "feinkrümelig" in Sinne der Erfindung, dass das vom Inputmaterial abgesiebte Kultursubstrat in körperlicher Hinsicht aus Krumen oder Krümeln, d.h. aus siebungsbedingt abgebröckelten Stückchen oder Bröckchen, kleiner als 2mm besteht. Ferner ist eine Eigenschaft des Kultursubstrats, dass es bereits bei leichter Krafteinwirkung auf feuchtigkeitsbedingt gebildeten kleinen Klumpen (1-2cm) der Krumen wieder diese Krumen zerfällt, so dass es sehr locker und leicht verarbeitbar ist.

Zur Gewinnung dieses feinkrümeligen Kultursubstrats wird gemäß einem ersten Aspekt der Erfindung vorgeschlagen, dass das Inputmaterial oder zumindest eine Fraktion des Inputmaterials einer Siebmaschine zugeführt wird, die das Inputmaterial oder die Fraktion in eine erste Kornfraktion und eine den Kultursubstrats bildende zweite Kornfraktion mit einer Korngröße von im Wesentlichen kleiner gleich 2mm auftrennt, indem das Inputmaterial oder die Fraktion in der Siebmaschine über eine in eine Arbeitsrichtung zumindest abschnittsweise abwärts gerichtete, schwingende Siebfläche transportiert wird, die wenigstens einen ersten Siebbereich mit einer ersten Lochung oder Maschenweite, und einen in Arbeitsrichtung dahinter liegenden zweiten Siebbereich mit einer zweiten Lochung oder Maschenweite umfasst, deren Löcher oder Maschen in wenigstens eine Richtung eine geringere Abmessung haben, als die Löcher oder Maschen der ersten Lochung. Anschließend wird das gewonnene Kultursubstrat als Zuschlagstoff zur Herstellung von Blumen- oder Pflanzenerde oder zur Ausbringung auf einem oder Einbringung in einen Kulturboden verwendet. Es dient somit als Ersatz für Mutterboden.

Das nach dem erfindungsgemäßen Verfahren gewonnene Kultursubstrat hat aufgrund der mineralischen und organischen Bestandteile des Inputmaterials und der Feinkrümeligkeit kultivierfähige Eigenschaften, die mit Mutterboden vergleichbar sind, jedoch ist Mutterboden kompakter und fester, weshalb das gewonnene Kultursubstrat leichter verarbeitet werden kann. Die krümelige Struktur des Kultursubstrats sorgt für Luftaustausch und ist in der Lage Wasser zu halten. Es benötigt deshalb weniger Wasser. Die organischen Bestandteile fördern die Fruchtbarkeit, lockern schwere Böden und wirken gegen Bodenversauerung. Das Kultursubstrat ist daher sowohl für die Ausbringung im Ackerbau sowie im Garten- und Landschaftsbau zur Auf- oder Einbringung in Kulturböden als auch für die Herstellung von Blumen- und Pflanzenerde hervorragend geeignet.

Mutterboden, auch als Muttererde oder Oberboden und unter Landwirten auch als Ackerkrume bezeichnet, ist der oberste und fruchtbarste Schicht des Bodens, der im Gegensatz zum Unterboden einen hohen Anteil an Nährstoffen (insbesondere Stickstoff) und organischen Bestandteilen sowie eine große Menge an Bodenlebewesen umfasst.

Unter "mineralischen Bestandteilen" sind im Wesentlichen Feinsand, Schluff und Ton zu verstehen. Ferner sind unter "organischen Bestandteilen" insbesondere Mutterboden, Humus, Torf, Faulschlamm und/ oder Pflanzenreste (Wurzeln) zu verstehen. Humus meint hierbei die Gesamtheit des zersetzten organischen Anteils im Boden, der stark von Mikroorganismen wie Bodenbakterien und Pilzen durchsetzt ist und von diesen kontinuierlich auf, um und abgebaut wird.

Zur Herstellung der Blumen- oder Pflanzenerde kann das Kultursubstrat mit Komposterde, Mutterboden und/oder Torf sowie mit wenigstens einem Zuschlagstoff wie beispielsweise Kalk, Düngemittel und/ oder Sand gemischt werden. Als Komposterde ist jene Erde zu verstehen, die mit Kompost, d.h. dem Endprodukt der Kompostierung organischer Abfälle, vermischt ist. Sie dient der natürlichen Düngung und der Bodenverbesserung. Der hohe Humusanteil in Komposterde verleiht ihr einen hohen Nährstoffanteil, welcher den Boden besonders fruchtbar macht. Durch das Kultursubstrat kann auf Zuschlagsstoffe wie Holzfasern und/ oder Borke verzichtet werden.

Die mit dem gewonnenen Kultursubstrat hergestellte Blumen- oder Pflanzenerde kann dann auf Beete oder Ackerflächen, genauer gesagt, den dort befindlichen Kulturboden ausgebracht oder in diesen eingearbeitet bzw. untergemischt werden. Alternativ kann das gewonnene Kultursubstrat auch direkt auf Kulturböden ausgebracht oder in diese eingebracht werden.

Unter Kulturboden ist jegliche Bodenart zu verstehen, die eine landwirtschaftliche Nutzung für den Anbau oder die Zucht von Pflanzen grundsätzlich ermöglicht. So zählen zum Kulturboden ein Sandboden, humoser Sandboden, lehmiger Sandboden, sandiger Lehmboden, nicht sandiger Lehmboden, Tonboden und Moorboden. Dabei beschränkt die Angabe "landwirtschaftliche Nutzung" den Kulturboden nicht hinsichtlich seiner Größe, zum Beispiel, auf großflächige Ackerböden. Vielmehr liegt ein Kulturboden auch bei Beeten im Bereich der Hobbygärtnerei vor. Der Kulturboden kann Mutterboden sein oder enthalten, er kann aber auch frei von Mutterboden sein und erst durch das Kultursubstrat fruchtbar werden oder in seiner Fruchtbarkeit zumindest verbessert werden.

Mit der erfindungsgemäßen Verwendung eignet sich das Kultursubstrat somit ideal für den Garten- und Landschaftsbau, einschließlich der Hobbygärtnerei, sowie für die landwirtschaftliche Nutzung, insbesondere zur Einarbeitung in die Erde (Mutterboden des Ackers) bei der Feldbestellung auf dem Land. Die Bodenqualität kann dadurch verbessert und der Bodenertrag erhöht werden.

Soweit bei dem Siebverfahren von einem Auftrennen die Rede ist, bedeutet dies keine absolute Trennung von Fraktionen bestimmter Korngrößen voneinander. Vielmehr wird die zweite Korngröße von dem Material abgesiebt, mit dem die Siebmaschine beschickt wird. Die erste Kornfraktion besitzt somit einen geringeren Anteil an Körnern kleiner 2mm als das Inputmaterial und ist bestenfalls von diesen Körnern bereinigt. Dabei ist der Sieberfolg umso größer, je weniger Anteil an Körnern der zweiten Kornfraktion in der ersten Kornfraktion verbleibt. Die erste Kornfraktion enthält damit eine Korngröße von im Wesentlichen größer als 2mm, aber auch noch Anteile der Kornfraktion kleiner 2mm.

Bei der Arbeitsrichtung handelt es sich um diejenige Richtung, in die sich das Material in der Siebmaschine während ihres Betriebs hauptsächlich bewegt. Sie entspricht außerdem der Richtung der Neigung der Siebfläche.

Des Weiteren wird nachfolgend eine Anlage zur Gewinnung des feinkrümeligen Kultursubstrats aus dem Inputmaterial in Form von Bodenaushub beschrieben, umfassend
- einen Bunker zur Aufnahme von Inputmaterial,
- eine Siebmaschine zur Auftrennung des Inputmaterials oder zumindest eine Fraktion des Inputmaterials in eine erste Kornfraktion und eine das Kultursubstrat bildende zweite Kornfraktion mit einer Korngröße von im Wesentlichen kleiner gleich 2mm, und
- eine Transporteinrichtung zur Förderung des Inputmaterials oder der Fraktion vom Bunker zur Siebmaschine,
wobei die Siebmaschine eine in eine Arbeitsrichtung zumindest abschnittsweise abwärts gerichtete, schwingende Siebfläche aufweist, die wenigstens einen ersten Siebbereich mit einer ersten Lochung oder Maschenweite, und einen in Arbeitsrichtung dahinterliegenden zweiten Siebbereich mit einer zweiten Lochung oder Maschenweite umfasst, deren Löcher oder Maschen in wenigstens eine Richtung eine geringere Abmessung haben als die Löcher oder Maschen der ersten Lochung.

Durch das erfindungsgemäße Verfahren und die entsprechende Anlage wird bisher ungenutzt gebliebener Bodenaushub aus Baugruben und/ oder Material von Bodendeponien für die Verwendung im Garten- und Landschaftsbau und in der Landwirtschaft verfügbar gemacht. Wie bereits zuvor erläutert, besitzt das auf diese Weise aus dem Bodenaushub als Inputmaterial gewonnene Kultursubstrat dem Mutterboden vergleichbare Kultivierungseigenschaften und kann dadurch als Ersatz für Mutterboden dienen, bei der Herstellung von Blumen- und Pflanzenerde eigesetzt werden oder direkt auf Kulturböden ausgebracht oder eingearbeitet werden.

Das erfindungsgemäße Verfahren ermöglicht es Deponiebetreibern und Tiefbauunternehmen, ihren Bodenaushub als eine neue Wertstoffquelle zu erschließen und technisch für neue Zwecke nutzbar zu machen. Die Kapazität von Deponien wird dadurch erweitert und/ oder sie können länger betrieben werden.

Als Inputmaterial verwendbare Materialien eignen sich grundsätzlich alle steinigen, sandigen und/ oder lehmigen Böden mit mineralischen Bestandteilen einerseits, insbesondere Feinsand, Schluff und Ton, und organischen Bestandteilen andererseits, insbesondere Humus, Torf, Mutterboden, Faulschlamm und/ oder Pflanzenreste (Wurzeln).

Das Inputmaterial kann sowohl aus Gruben, insbesondere Baugruben gewonnen als auch Bodendeponien entnommen werden. Selbstverständlich sollte das Inputmaterial frei von Kontaminationen durch für den Menschen oder das Tier schädliche Stoffe sein, insbesondere Giftstoffe und Schwermetalle.

Je nach Zusammensetzung des Inputmaterials kann eine bestimmte Aufbereitung sinnvoll sein, wobei der Ertrag der zweiten Kornfraktion von 0-2mm prozentual unterschiedlich ausfallen kann.

Vor der Verwendung eines Inputmaterials für das erfindungsgemäße Verfahren kann das Inputmaterial einer qualitativen optischen Prüfung, entweder messtechnisch und/ oder im Rahmen einer Sichtkontrolle durch eine geschulte Person, unterzogen werden, bei der die Farbe und/ oder Helligkeit des Inputmaterials für die Beurteilung herangezogen wird, ob das Inputmaterial zur Gewinnung des Kultursubstrats geeignet ist. Schwarzes oder dunkelbraunes Inputmaterial deutet auf einen hohen Anteil organischer Bestandteile und damit auf seine Eignung zur Gewinnung des Kultursubstrats hin, während hellbraunes, ockerfarbenes oder gelbliches Inputmaterial auf das Fehlen organischer Bestandteile und auf einen hohen Gehalt an mineralischen Bestandteilen, insbesondere Sand hinweist. Auch deutet ein rotbräunliches oder rötliches Inputmaterial auf das Fehlen organischer Bestandteile. Es kann deshalb vorgesehen sein, dass das Inputmaterial nur dann für das erfindungsgemäße Verfahren verwendet wird, wenn dessen Farbe dunkelbraun bis schwarz ist oder dessen Farbhelligkeit unter einem bestimmten Grenzwert liegt.

Alternativ und/ oder zusätzlich kann vorgesehen sein, dass Inputmaterial einer qualitativen olfaktorischen Prüfung, entweder messtechnisch und/ oder im Rahmen einer Geruchskontrolle durch eine geschulte Person, unterzogen werden, um abzuwägen, ob das Inputmaterial zur Gewinnung des Kultursubstrats geeignet ist. So riecht ein Boden mit einem hohen Anteil an organischen Bestandteilen aufgrund deren Zersetzung durch Mikroorganismen und Pilze charakteristisch, beispielsweise nach einem Wald- oder Moorboden. So ist es beispielsweise bekannt, dass das Bakterium Streptomyceten beim Abbau von verrottendem Material wie heruntergefallenes Laub, Nadeln oder Gehölz die beiden Duftstoffe 2-Methyl-Iso-Borneol und Geosmin versprühen. Es kann deshalb vorgesehen sein, dass das Inputmaterial nur dann für das erfindungsgemäße Verfahren verwendet wird, wenn wenigstens ein bestimmter Duftstoff im Inputmaterial vorhanden ist, wie beispielsweise 2-Methyl-Iso-Borneol und/ oder Geosmin, oder dieser wenigstens eine Duftstoff einen bestimmten Grenzwert überschreitet.

Um den Ertrag der zweiten Kornfraktion, d.h. des Kultursubstrats zu steigern, kann versucht werden, den Durchsatz der Siebmaschine zu verringern, d.h. die Menge an Inputmaterial pro Zeit, die der Siebmaschine zugeführt wird. Untersuchungen haben gezeigt, dass bei einer zu großen Menge an Inputmaterial auf der Siebfläche weniger der zweiten Kornfraktion abgesiebt wird, weil das Inputmaterial auf der Siebfläche weniger schwingt und sich die Löcher mehr zusetzen bzw. weniger gut wieder frei werden. Es ist deshalb zu empfehlen, dass während des Betriebs der Anlage die Menge des insgesamt gewonnenen Kultursubstrats im Verhältnis zur Menge des Inputmaterials oder zur Menge der ersten Kornfraktion bewertet wird. Sinnvollerweise kann die der Siebmaschine zugeführte Menge an Inputmaterial pro Zeit reduziert werden, wenn die Menge des insgesamt gewonnenen Kultursubstrats im Verhältnis zur Menge des Inputmaterials oder zur Menge der ersten Kornfraktion unter einem Grenzwert liegt. Je nach Art und Beschaffenheit des Inputmaterials kann aus diesem ein Anteil des feinkrümeligen Kultursubstrats von bis zu 75% gewonnen werden, wobei auch ein Anteil von 33% noch wirtschaftlich sinnvoll ist.

Somit kann der Grenzwert beispielsweise zwischen 33% und 66%, vorzugsweise bei 50% liegen.

Um die der Siebmaschine zuzuführende Menge an Inputmaterial pro Zeit zu reduzieren, kann vorgesehen sein, dass die die Siebmaschine beschickende Transporteinrichtung zumindest in einem Abschnitt in ihrer Fördergeschwindigkeit änderbar bzw. einstellbar ist. Somit kann die Fördermenge des Inputmaterials pro Zeiteinheit eingestellt werden. Die Anlage kann eine entsprechende Anlagensteuerung zur Einstellung der Fördergeschwindigkeit der Transporteinrichtung umfassen.

Die Bewertung oder Bestimmung der Menge an Kultursubstrat, Inputmaterial bzw. erster Kornfraktion kann anhand des Gewicht oder des Volumens erfolgen. Ferner kann die Bewertung oder Bestimmung durch eine die Anlage bedienende Person oder automatisiert erfolgen. Werden die erste und zweite Kornfraktion jeweils auf einen Schüttkegel geworfen, beispielsweise mittels eines Transportbands, so kann anhand eines Höhen- oder Größenvergleichs der Schüttkegel unmittelbar qualitativ das Verhältnis der ersten und zweiten Kornfraktion erkannt werden. Die Person kann erkennen, wenn der Schüttkegel der zweiten Kornfraktion, d.h. des Kultursubstrats, deutlich kleiner als der Schüttkegel der ersten Kornfraktion ist und in diesem Fall die Fördergeschwindigkeit reduzieren, d.h. die Menge an Inputmaterial, das der Siebmaschine zugeführt wird, verringern.

Ein Größenvergleich der beiden Schüttkegel kann auch automatisch erfolgen. Beispielsweise können deren Durchmesser und/ oder Höhen mit einer Kamera erfasst und mittels einer Bildverarbeitungssoftware ausgewertet, insbesondere verglichen werden. Gegebenenfalls kann eine senkrechte Messlatte mit Höhenmarken, um die herum der jeweilige Schüttkegel entsteht, oder eine Maßeinteilung auf dem Boden des jeweiligen Schüttkegels, z.B. mit konzentrischen Messringen als Bodenmarkierung, eine quantitative Aussage über die aktuelle Höhe oder den aktuellen Durchmesser des jeweiligen Schüttkegels liefern. Eine Kamera in Verbindung mit einer Bildauswertungssoftware können diese Höhen und/ oder Durchmesser erfassen und einer Auswerteeinheit bereitstellen, die die Höhen und/ oder Durchmesser der Schüttkegel ermittelt und miteinander vergleicht. Alternativ kann auch eine Sensorik, beispielsweise eine oder mehrere Lichtschranken verwendet werden, die einer Auswerteeinheit das Erreichen einer bestimmten Höhe oder eines bestimmten Durchmessers des entsprechenden Schüttkegels zu einem bestimmten Zeitpunkt signalisieren, wobei in diesem Fall der zeitliche Unterschied zwischen den entsprechenden Zeitpunkten das Größen- bzw. Mengenverhältnis der beiden Schüttkegel angibt.

Die Auswerteeinheit kann dann das Größen- oder Mengenverhältnis der Schüttkegel bilden und ein Steuersignal an die Anlagensteuerung senden, infolge welchem diese dann die Fördergeschwindigkeit der Transporteinrichtung reduziert, wenn der oben genannte Grenzwert unterschritten, mit anderen Worten, der Schüttkegel der zweiten Kornfraktion erheblich kleiner ist als der Schüttkegel der ersten Kornfraktion. Diese Auswertung kann zu einem bestimmten Zeitpunkt nach dem Einschalten der Anlage, mehrmalig zu bestimmten Zeitpunkten oder sogar im Rahmen einer Regelung kontinuierlich erfolgen.

Alternativ zu einer visuellen Beurteilung der Schüttkegel, d.h. des Volumens der ersten und zweiten Kornfraktion, kann die Masse bzw. das Gewicht des insgesamt gewonnenen Kultursubstrats herangezogen und mit dem Gewicht des Inputmaterials oder der insgesamt erzeugten ersten Kornfraktion verglichen werden. Dies kann mittels Waagen erfolgen. Beispielsweise kann das Gewicht des Bunkers laufend gemessen werden. Ebenso können die erste und/ oder zweite Kornfraktion in entsprechenden Behältnissen gesammelt werden, deren Gewicht mittels einer entsprechenden Waage dann laufend bestimmt wird. Während das Gewicht dieser Behältnisse dann direkt miteinander verglichen werden kann, ist bei dem Bunker zunächst das Differenzgewicht zu bestimmen, um die Menge an aus dem Bunker bereits abgeführten Inputmaterial zu quantifizieren. Dieses Differenzgewicht kann dann ins Verhältnis gesetzt werden mit dem Gewicht der Menge der zweiten Kornfraktion, d.h. des Kultursubstrats.

Bevorzugt weist die das Inputmaterial oder deren Fraktion vom Bunker zur Siebmaschine fördernde Transporteinrichtung eine Waage auf, die zu jedem Zeitpunkt das auf der Transporteinrichtung befindliche Material wiegt. Durch Integration der Messwerte über einen Zeitraum kann dann das Gewicht des insgesamt geförderten Inputmaterials bestimmt werden. Eine ebensolche Waage kann Teil einer anderen Transporteinrichtung sein, die die zweite Kornfraktion bzw. das Kultursubstrat von der Siebmaschine abtransportiert. Durch Integration der Messwerte über den Zeitraum kann dann auch hier das Gewicht des insgesamt geförderten bzw. gewonnenen Kultursubstrats bestimmt werden.

Die Auswerteeinheit kann die Gewichtsverhältnisse bilden und ein Steuersignal an die Anlagensteuerung senden, infolge welchem diese die Fördergeschwindigkeit der Transporteinrichtung reduziert, wenn der oben genannte Grenzwert unterschritten, mit anderen Worten, die Masse der zweiten Kornfraktion erheblich kleiner ist, als die Masse der ersten Kornfraktion bzw. des Inputmaterials. Diese Auswertung kann zu einem bestimmten Zeitpunkt nach dem Einschalten der Anlage, mehrmalig zu bestimmten Zeitpunkten oder sogar im Rahmen einer Regelung kontinuierlich erfolgen.

Insbesondere kann die der Siebung zuzuführende Menge an Inputmaterial pro Zeit auch gesteigert werden, wenn die Menge gewonnenen Kultursubstrats im Verhältnis zur Menge des Inputmaterials über dem Grenzwert oder einem anderen Grenzwert liegt, der kleiner als der erstgenannte Grenzwert ist. Dies ist vor allem im Rahmen der zuvor erwähnten Regelung sinnvoll, um den Durchsatz (Menge an Inputmaterial pro Zeit) der Anlage und damit deren Wirtschaftlichkeit zu steigern.

Ein hoher Ertrag an Kultursubstrat wird erreicht, wenn der Durchsatz der Anlage auf einen Wert zwischen 50 kg und 200 kg pro Minute und Quadratmeter Siebfläche, vorzugsweise auf etwa 100 kg pro Minute und Quadratmeter Siebfläche eingestellt wird. Beträgt die Siebfläche der Siebmaschine beispielsweise 20m², liegt der Durchsatz bei 2 Tonnen pro Minute bzw. 120 t pro Stunde.

Sinnvoll ist es, wenn die Siebung des Inputmaterials mehrstufig erfolgt. Insbesondere kann vorgesehen sein, dass vor der Zuführung des Inputmaterials zur Siebmaschine in einer dieser vorgelagerten ersten Siebstufe eine Abscheidung eines Überkorns erfolgt. Als Überkorn ist diejenige Fraktion des Inputmaterials zu verstehen, deren Korngröße einen oberen Grenzwert überschreitet, beispielsweise größer als 45mm ist. Dadurch wird verhindert, dass Überkorn in die Siebmaschine gelangt und deren Siebelemente beschädigt. Denn durch die Schwingung der Siebfläche kann das Überkorn eine derart große kinetische Energie aufnehmen und beschleunigt werden, dass es die Siebelemente beim Auftreffen durchschlägt bzw. die Sieblöcher aufreißen.

Die Abscheidung des Überkorns kann durch einen Grobabscheider erfolgen, der die erste Siebstufe bildet. Die Siebmaschine bildet dann die nachgelagerte zweite Siebstufe. Das Inputmaterial wird dann durch die erste Siebstufe in eine Überkornfraktion und eine von Überkorn befreite Fraktion aufgetrennt. Letztere wird dann an der Siebmaschine in die erste und zweite Kornfraktion aufgetrennt. Ist das Inputmaterial allerdings bereits von Überkorn befreit, kann es direkt an die Siebmaschine geliefert werden.

In einer bevorzugten Ausführungsvariante ist die Siebfläche durch Siebelemente in Gestalt von rechteckigen, länglichen Einzelsieben gebildet, die an ihrer Längsseite aneinander liegen, wobei die Arbeitsrichtung der Siebmaschine quer zur Längserstreckung der Einzelsiebe, d.h. in Richtung ihrer Breite liegt. Längliche Einzelsiebe haben den Vorteil, dass die Siebfläche auf einfache Weise konvex oder konkav gebogen sein kann. Beispielsweise kann die Länge der Einzelsiebe mindestens dem Fünffachen, vorzugsweise dem Zehnfachen ihrer Breite entsprechen. Bei einer Breite von ca. 30cm können die Einzelsiebe bevorzugt eine Länge von 3m haben. Die Siebmaschine kann die einfache oder doppelte Breite der Einzelsiebe aufweisen.

Von Vorteil ist es, wenn die Einzelsiebe durch elastische Siebmatten gebildet sind, beispielsweise aus elastomerem Polyurethan. Diese haben den Vorteil, dass sie die kinetische Energie der größeren Körner des auf die Siebmaschine geschickten Inputmaterials oder deren von Überkorn befreiten Fraktion beim Aufprall absorbieren und damit insgesamt die Kornbewegung dämpfen. Die kinetische Energie wird durch die Schwingung der Siebfläche auf das Material auf der Siebfläche übertragen. Durch den Aufprall werden an den größeren Körnern des Inputmaterials haftende kleinere Körner der zweiten Kornfraktion abgeworfen und können somit durch die Sieblöcher hindurchfallen. Infolge der Dämpfung wird vermieden, dass die kinetische Energie der Körner zu groß wird und sie die Einzelsiebe durchschlagen.

Des Weiteren hat die Elastizität der Siebmatten den Vorteil, dass die Sieblöcher in Form und Größe nicht starr sind. Vielmehr lässt ihre Verformbarkeit zu, dass ein Korn mit einer geringfügig größeren Abmessung als ein Siebloch durch dieses hindurchgedrückt werden kann, insbesondere wenn ein anderes Korn entsprechender Größe gegen dieses eine Korn prallt. Somit ist das Verstopfungsrisiko der Sieblöcher durch Körner, die in diesen stecken bleiben könnten, minimal. Ferner wird auch eine Verstopfung der Sieböffnungen durch Feinstkorn (kleiner 0,5mm), das sich zunehmend am Rand der Sieblöcher ablagert und von dort wachsend schlimmstenfalls das ganze Siebloch schließt, infolge der möglichen Verformung des Sieblochrandes durch die Bewegung der gröberen Körner verhindert. Die elastischen Siebmatten bewirken insoweit einen Selbstreinigungseffekt.

Ein besonders hoher Ertrag an Kultursubstrat wird erreicht, wenn die Einzelsiebe eine Sieblochung mit länglichen Sieblöchern aufweisen, die parallel zur Arbeitsrichtung orientiert sind. Vorzugsweise sind die Sieblöcher als Langlöcher ausgebildet, d.h. sie besitzen keine Innenecken. Dies hat den Vorteil, dass sie sich weniger mit Feinstkorn zusetzen und leichter gereinigt werden können, insbesondere im Rahmen des vorgenannten Selbstreinigungseffekts.

Ideal für ein gutes Siebergebnis ist es ferner, wenn die Schwingung der Siebfläche durch eine vertikale auf und ab Bewegung erreicht wird. Dies bewirkt allgemein betrachtet ein Hüpfen des Inputmaterials auf der Siebfläche. Genauer betrachtet, wird dadurch erreicht, dass die gröberen Körner im Inputmaterial immer wieder auf die Siebfläche schlagen, wodurch
1. die zweite Kornfraktion von den gröberen Körnern abgeschüttelt wird, was den Ertrag an Kultursubstrat erhöht,
2. die gröberen Körner solche Körner, die Sieblöcher verstopfen, dort hindurch stoßen, sowie Feinstkornablagerungen an den Sieblöchern entfernen, und
3. die Körner der zweiten Kornfraktion mit den gröberen Körnern kollidieren und von diesen in Richtung der Sieblöcher geschleudert werden, wo sie dann entsprechend hindurchfallen.

Es ist des Weiteren von Vorteil, wenn die vertikale auf und ab Bewegung entlang einer elliptischen Bahn erfolgt. Hierdurch erhält das Inputmaterial auf der Siebfläche gleichzeitig eine Bewegungskomponente in Richtung der Arbeitsrichtung und wird somit auf der Siebfläche vorwärts transportiert.

Je nach gewünschter Siebfläche kann die Siebmaschine mehr oder weniger Einzelsiebe aufweisen, insbesondere zwischen 15 und 25 Einzelsiebe. Die Anzahl an Einzelsieben hängt von der Siebmaschinengröße ab. Werden rein beispielhaft 21 Einzelsiebe eingesetzt, ergibt sich z.B. bei einer Länge von 3m und einer Breite von ca. 30cm der Einzelsiebe eine Fläche von 18,9m². Selbstverständlich könnte auch beispielsweise nur die Hälfte an Einzelsieben mit einer doppelten Breite verwendet werden, um dieselbe Siebfläche zu erreichen. Die Verwendung einer vergleichsweise geringen Breite von z.B. 30cm ist jedoch von Vorteil, um die Siebfläche möglichst variantenreich mit Einzelsieben unterschiedlicher Lochungen ausstatten zu können.

Erfindungsgemäß umfasst die Siebfläche wenigstens einen ersten Siebbereich mit einer ersten Lochung oder Maschenweite und einen in Arbeitsrichtung dahinterliegenden zweiten Siebbereich mit einer zweiten Lochung oder Maschenweite. Innerhalb eines Siebbereichs liegt somit eine einheitliche Lochung vor bzw. liegen Sieblöcher einheitlicher Größe vor. In einer Ausführungsvariante können auch drei oder mehr derartige Siebbereiche hintereinanderliegen.

Um die genannten Siebbereiche zu bilden, können die Einzelsiebe jeweils eine einheitliche Lochung aufweisen und je einer Gruppe angehören, von denen wenigstens eine erste Gruppe eine erste Lochung und eine zweite Gruppe eine zweite Lochung aufweist, wobei die zweite Lochung in wenigstens einer Erstreckungsrichtung der Sieblöcher kleiner als die erste Lochung ist. Die Einzelsiebe der ersten Gruppe können dann den ersten Siebbereich und die Einzelsiebe der zweiten Gruppe den zweiten Siebbereich bilden. Die Siebe einer Gruppe sind immer gleich.

In einer bevorzugten Weiterbildung gehören die Einzelsiebe einer von drei Gruppen an, die jeweils eine erste, zweite und dritte Lochung haben, wobei die zweite Lochung in wenigstens einer Erstreckungsrichtung der Sieblöcher kleiner als die erste Lochung und die dritte Lochung in wenigstens einer Erstreckungsrichtung der Sieblöcher kleiner als die zweite Lochung ist. Die Einzelsiebe der ersten Gruppe können dann den ersten Siebbereich, die Einzelsiebe der zweiten Gruppe den zweiten Siebbereich und die Einzelsiebe der dritten Gruppe einen dritten Siebbereich bilden, der in Arbeitsrichtung hinter dem zweiten Siebbereich folgt.

Empirische Untersuchungen bei einer Siebmaschine mit drei Siebbereichen haben gezeigt, dass ein besonders hoher Sieberfolg dann vorliegt, wenn
- die erste Lochung Sieblöcher mit einer Lochabmessung von 5x25mm,
- die zweite Lochung Sieblöcher mit einer Lochabmessung von 3x20mm, und
- die dritte Lochung Sieblöcher mit einer Lochabmessung von 3x10mm aufweist.

Allerdings sind auch Lochungen mit anderen Lochabmessungen möglich. Besitzt die Siebmaschine nur zwei Siebbereiche, können diese durch Einzelsiebe der ersten und zweiten Lochung gebildet sein.

Für den vorgenannten Fall können z.B. vier Einzelsiebe mit der ersten Lochung, fünfzehn Einzelsiebe mit der zweiten Lochung und zwei Einzelsiebe mit der dritten Lochung die Siebfläche bilden. Allerdings kann die Anzahl der Einzelsiebe auch anders sein.

Es wurde ferner erkannt, dass die Wahl der Lochung bzw. der Lochungsfolge für die einzelnen Siebbereiche in Abhängigkeit der Feuchtigkeit des Inputmaterials erfolgen sollte, um einen hohen Ertrag an Kultursubstrat zu erhalten. So eignet sich die vorstehend genannte Folge von Lochungen bzw. Einzelsieben zum Absieben der zweiten Kornfraktion bevorzugt bei vergleichsweise trockenem Inputmaterial. Demgegenüber kann bei feuchterem Inputmaterial eine andere Folge von Lochungen verwendet werden. Insbesondere sollte mit zunehmender Feuchte des Inputmaterials eine größere Lochung und bei trockenem Inputmaterial eine kleinere Lochung verwendet werden.

Als vergleichsweise trockenes Inputmaterial können Böden mit einer relativen Feuchtigkeit (Haftfeuchte) bzw. der Wasseranteil unter 8% betrachtet werden, wobei vergleichsweise feuchtes Inputmaterial eine höhere Feuchtigkeit als 8% Wasseranteil besitzt. Beispielsweise liegt die relative Feuchtigkeit bei vergleichsweise trockenen Böden, die im Sommer das Inputmaterial bilden, zwischen 6% und 7%, insbesondere bei ca. 6,6%. Demgegenüber liegt die relative Feuchtigkeit bei Böden, die im Winter das Inputmaterial bilden überwiegend zwischen 10% und 15%, beispielsweise bei 13,8% Wasseranteil. Selbstverständlich darf das Inputmaterial nicht nass sein, weshalb seine Lagerung überdacht erfolgen sollte.

Es kann deshalb vorgesehen sein, dass die Feuchtigkeit des Inputmaterials oder eine davon abhängige Größe wie beispielsweise die elektrische Leitfähigkeit bestimmt wird und die Lochungen respektive die Einzelsiebe in Abhängigkeit der Feuchtigkeit bzw. der davon abhängigen Größe ausgewählt und verwendet werden, wobei bei einer höheren Feuchtigkeit eine im Wesentlichen größere Lochung bzw. Einzelsiebe mit einer im Wesentlichen größeren Lochung, und bei einer geringeren Feuchtigkeit eine im Wesentlichen kleinere Lochung bzw. Einzelsiebe mit einer im Wesentlichen kleineren Lochung verwendet werden. In diesem Zusammenhang beziehen sich die Angaben "kleinere Lochung" und "größere Lochung" auf die Querschnittsfläche der Sieblöcher. Der Erkenntnisgewinn, bei trockenerem Inputmaterial eine kleinere Sieblochquerschnittsfläche zu verwenden, als bei feuchterem Inputmaterial, ist darin begründet, dass die zweite Kornfraktion bei feuchterem Inputmaterial die effektive Querschnittsfläche der Lochung verringert. Diesem Phänomen wird durch Sieblöcher mit einer größeren Querschnittsfläche entgegengewirkt.

Ist das Inputmaterial feuchter, kann somit eine andere Folge von Lochungen verwendet werden, insbesondere Lochungen, die im Wesentlichen größere Lochabmessungen bzw. Lochquerschnittsflächen haben. Beispielsweise kann in diesem Fall
- die erste Lochung Sieblöcher mit einer Lochabmessung von 7x25mm,
- die zweite Lochung Sieblöcher mit einer Lochabmessung von 5x25mm, und
- die dritte Lochung Sieblöcher mit einer Lochabmessung von 2x20mm aufweisen. Allerdings sind auch hier Lochungen mit anderen Lochabmessungen möglich.

Für den vorgenannten Fall feuchteren Inputmaterials können z.B. zehn Einzelsiebe mit der ersten Lochung, fünf Einzelsiebe mit der zweiten Lochung und sechs Einzelsiebe mit der dritten Lochung die Siebfläche bilden. Allerdings kann die Anzahl der Einzelsiebe auch hier anders sein.

In einer Ausführungsvariante kann vorgesehen sein, dass die Anlage eine erste Siebmaschine und eine zweite Siebmaschine aufweist, denen das Inputmaterial wahlweise zuleitbar ist, wobei die erste Siebmaschine für trockeneres und die zweite Siebmaschine für feuchteres Inputmaterial zuständig ist. So kann die Feuchtigkeit oder eine davon abhängige Größe bestimmt und in Abhängigkeit der ermittelten Feuchtigkeit oder Größe die erste oder zweite Siebmaschine beschickt werden. Die erste und zweite Siebmaschine können dabei jeweils eine Siebfläche mit wenigstens einer ersten und zweiten Lochung aufweisen, wobei die Sieblöcher der ersten und zweiten Lochung der Siebfläche der ersten Siebmaschine eine im Wesentlichen größere Querschnittsfläche aufweisen, als die Sieblöcher der ersten und zweiten Lochung der Siebfläche der zweiten Siebmaschine. Rein beispielhaft kann die erste Siebmaschine die zuerst genannte Lochungsreihenfolge (5x25, 3x20, 3x10), und die zweite Siebmaschine die zuletzt genannte Lochungsreihenfolge (7x25, 5x25, 2x20) aufweisen.

Die Zuleitung des Inputmaterials zur jeweiligen Siebmaschine kann über eine gemeinsame Transporteinrichtung erfolgen, die beispielsweise zwischen der ersten und zweiten Siebmaschine schwenkbar ist und je nach Inputmaterial bzw. in Abhängigkeit dessen Feuchtigkeit ausgerichtet wird. Alternativ kann die Zuleitung des Inputmaterials zur jeweiligen Siebmaschine durch je eine der entsprechenden Siebmaschine zugeordnete Transporteinrichtung erfolgen, die entweder nur die erste oder nur die zweite Siebmaschine beliefert und wahlweise je nach Inputmaterial bzw. in Abhängigkeit dessen Feuchtigkeit von dem Bunker aus beschickt wird.

Wie zuvor erläutert, besteht die Möglichkeit, dass das Inputmaterial aufgrund eine zu hohe Feuchtigkeit aufweist, um es verarbeiten zu können. Dies kann beispielsweise bei Böden der Fall sein, die im Winter das Inputmaterial bilden. Ein hinreichender Sieberfolg ist dann nicht gewährleistet. In diesem Fall kann dem Inputmaterial Kalk, insbesondere unhydrierter Kalk (Calciumoxid CaO) hinzugegeben werden, der die Feuchtigkeit bindet. Es kann deshalb vorgesehen werden, dass die Feuchtigkeit des Inputmaterials bestimmt und diesem in Abhängigkeit der Feuchtigkeit Kalk, insbesondere Weißfeinkalk zugegeben wird. Dies kann in einer Ausführungsvariante derart erfolgen, dass oberhalb eines bestimmten Feuchtigkeitsgrenzwerts, der beispielsweise zwischen 8% und 12% liegen kann, ein definierter Gewichtsanteil an Kalk hinzugegeben wird, z.B. 1%. Bei einem Inputmaterial mit einer relativen Feuchtigkeit von 13,8% kann durch Zugabe von 1% Kalk die relative Feuchtigkeit auf 11,24% reduziert werden. 2% (Gewichtsprozent) Kalk würden die Feuchtigkeit weiter reduzieren. Alternativ kann die Menge an zugegebenem Kalk in Abhängigkeit der Feuchtigkeit stufenweise oder linear variieren, beispielsweise zwischen 1% Kalk ab 8% Feuchtigkeit und 5% ab einer Feuchtigkeit von 20%.

Die Zugabe von Kalk kann im einfachsten Fall dadurch erfolgen, dass mit dem Kalk gefüllter, sogenannter "Big Bag" über einem Schütthaufen von Inputmaterial entleert wird und der Kalk anschließend mittels einer Siebschaufel, einem Schaufelseparator oder einem Sieblöffel eines Baggers untergemischt wird. Ebenfalls möglich ist es, den Bunker mit einem Rührwerk, beispielsweise einer sich drehenden Schaufel auszustatten, die die Mischung des Inputmaterials mit dem Kalk bewirkt.

Vorzugsweise beträgt die Zugabe von Kalk maximal 5% (Gewichtsprozent) der Masse an Inputmaterial. Es ist deshalb bevorzugt, zunächst mit einer geringen Kalkzugabe von beispielsweise 1% zu arbeiten. Ist der Gewinn an Kultursubstrat zu gering, kann der Siebvorgang wiederholt werden, indem der ersten Kornfraktion erneut z.B. 1% Kalk zugegeben, durchmischt und der Siebmaschine zugeführt wird.

Bei der Durchmischung des mit Kalk versetzten Inputmaterials wird dieses gleichzeitig belüftet. Anschließend sollte das Inputmaterial ruhen, vorzugsweise mindestens 4 Stunden. Belüftung und Ruhen sind von besonderer Bedeutung, damit der Kalk (CaO) die Feuchtigkeit (H₂O) im Inputmaterial binden und zu Calciumhydroxid (Ca(OH)₂) sowie mit dem Kohlendioxid (CO₂) in der Luft zu Calciumcarbonat (CaCOs) reagieren kann. Dies hemmt die puzzolanische Reaktion, durch die das Kultursubstrat mit der Zeit erhärten würde und sich sein Einsatzbereich somit einschränkt. Ein Erhärten ist beispielsweise nachteilig, wenn das Kultursubstrat zum Einbetten elektrischer Kabel verwendet wird, weil er in diesem Fall die Abwärme des Kabels schlechter aufnehmen kann, mit anderen Worten das Kabel thermisch isoliert, was zu einer lokalen Überhitzung des Kabels führen könnte.

Beispielsweise kann die Zugabe von Kalk in Form eines Bindemittels erfolgen, dessen Anteil an Weißfeinkalk jedoch mindestens 70 % betragen sollte. Als Bindemittel kann Dorosol^{®} verwendet werden.

In einer Ausführungsvariante kann vorgesehen sein, dass die Feuchtigkeit der zweiten Kornfraktion bzw. des Kultursubstrats bestimmt und in Abhängigkeit der Feuchtigkeit die Menge an der Siebmaschine zugeführtem Inputmaterial pro Zeit angepasst wird. Insbesondere kann die Menge an zuzuführendem Inputmaterial pro Zeit für die Verarbeitung feuchteren Inputmaterials reduziert und für die Verarbeitung trockenerem Inputmaterials erhöht werden.

Um die Feuchtigkeit zu bestimmen, kann in einer Ausführungsvariante die elektrische Leitfähigkeit oder der elektrische Widerstand des Inputmaterials gemessen und daraus die Feuchtigkeit bestimmt werden. Beispielsweise können im Bunker Elektroden verbaut sein, die zu Beginn des Verfahrens und/ oder kontinuierlich die elektrische Leitfähigkeit oder den elektrischen Widerstand des Inputmaterials messen und an die Anlagensteuerung melden. Diese kann dann in Abhängigkeit der elektrischen Leitfähigkeit oder des elektrischen Widerstands die Menge an Inputmaterial, das der Siebmaschine zugeführt wird, erhöhen oder reduzieren, beispielsweise indem die Fördergeschwindigkeit der Transporteinrichtung entsprechend eingestellt wird.

Es ist ferner von Vorteil, wenn das gewonnene Kultursubstrat bzw. die abgesiebte zweite Kornfraktion auf einen Schüttkegel geworfen und beobachtet wird, ob sich um den Schüttkegel herum an dessen Fuß zunehmend ein Kranz gröberer Körner bildet, d.h. Körner mit einer Korngröße größer als 2mm. Dies beeinträchtigt die Homogenität des gewonnenen Kultursubstrats, und ist das Ergebnis einer zu großen Menge an Inputmaterial auf dem ersten Siebbereich der Siebmaschine, wodurch anstelle der gewünschten feinen Körner der zweiten Kornfraktion viele gröbere Körner durch die Löcher oder Maschen des ersten Siebbereichs hindurch fallen oder hindurchgedrückt werden. Dies kann verhindert werden, indem die der Siebmaschine zugeführte Menge an Inputmaterial pro Zeit reduziert wird, wenn sich zunehmend ein Kranz gröberer Körner am Fuße des Schüttkegels bildet.

Des Weiteren wird gemäß einem dritten Aspekt der Erfindung die Verwendung des nach dem erfindungsgemäßen Verfahren gewonnenen Kultursubstrats zur Herstellung von Blumen- oder Pflanzenerde oder zur Ausbringung auf einem oder Einbringung in einen Kulturboden im Garten- und Landschaftsbau oder in der Landwirtschaft vorgeschlagen.

Weitere Merkmale, Vorteile und Wirkungen der Erfindung werden nachfolgend anhand von Ausführungsbeispielen und der beigefügten Figuren näher erläutert. Bei den Figuren behalten identische oder funktionsgleiche Elemente von Figur zu Figur dasselbe Bezugszeichen.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Es zeigen:
- Figur 1:: Prinzipdarstellung einer Siebanlage zur Gewinnung des feinkrümeligen Kultursubstrats
- Figur 2:: Prinzipdarstellung einer Siebmaschine
- Figur 3:: Tabelle mit Angaben zu Siebfolgen
- Figur 4:: Diagramm zur Darstellung der Kalkzugabe in Abhängigkeit der Feuchte
- Figur 5:: Diagramm zur Darstellung der Bandgeschwindigkeit in Abhängigkeit der Feuchte

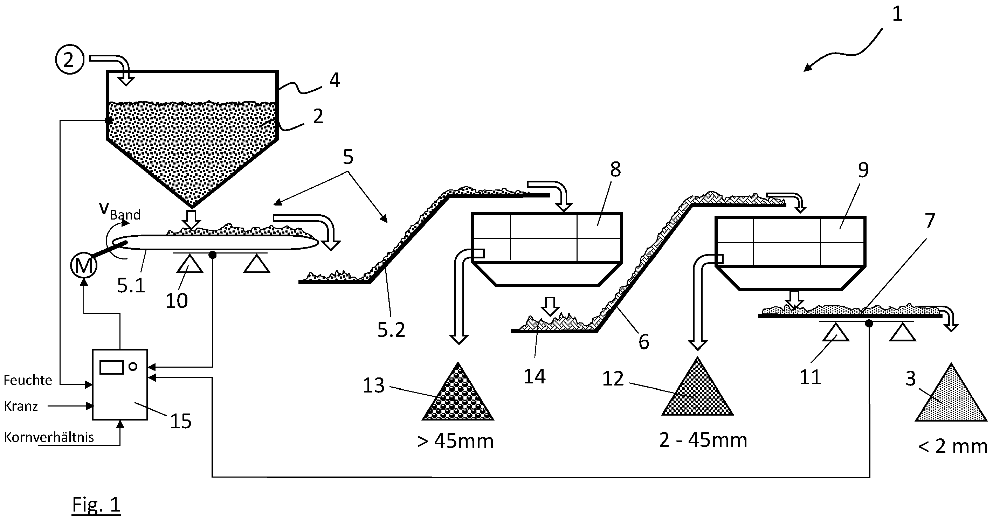

Figur 1 zeigt eine Siebanlage 1 zur Gewinnung eines feinkrümeligen Kultursubstrats 3 aus einem Inputmaterial 2 in Form von Bodenaushub. Die Anlage 1 umfasst im Wesentlichen einen Bunker 4 zur Aufnahme von Inputmaterial 2, eine erste Siebstufe 8 in Gestalt eines Grobabscheiders 8 und eine zweite Siebstufe 9 in Gestalt einer Siebmaschine 9, die in Transportrichtung des Inputmaterials 2 hinter dem Grobabscheider 8 liegt.

Der Grobabscheider 8 dient zur Abscheidung eines Überkorns 13, insbesondere mit einer Korngröße größer als 45mm, vor der Zuführung des Inputmaterials 2 zur Siebmaschine 9. Am Grobabscheider 8 wird somit eine übergroße Kornfraktion aus dem Inputmaterial 2 entfernt, die zu einer Beschädigung der Siebelemente innerhalb der Siebmaschine 9 führen kann. Das Überkorn 13 wird auf einem Schüttkegel aufgehäuft, z.B. über eine hier nicht dargestellte Transporteinrichtung, und der vom Überkorn 13 bereinigte Rest des Inputmaterials 2, nachfolgend Fraktion 14 genannt, wird der Siebmaschine zugeführt. Das Überkorn 13 kann einer anderen Verwertung zugeführt werden.

Die Siebmaschine 9 dient zur Auftrennung der genannten Fraktion 14 in eine erste Kornfraktion 12 und eine zweite Kornfraktion 3. Letztere ist das zu gewinnende Kultursubtrat 3, das eine Korngröße von im Wesentlichen 0 bis 2mm besitzt und deshalb auch als feinkrümelig oder Feinkorn bezeichnet werden kann. Die erste Kornfraktion 12 hat demgegenüber im Idealfall eine Korngröße zwischen 2 und 45 mm. In der Praxis ist es jedoch nicht möglich, 100% der ersten Kornfraktion 12 von der Fraktion 14 des Inputmaterials 2 abzusieben, so dass in der ersten Kornfraktion 12 immer auch ein mehr oder weniger großer Anteil der zweiten Kornfraktion 3 vorhanden ist. Je geringer dieser Anteil ist, desto höher ist der Ertrag der Siebanlage bzw. der Sieberfolg. Die erste Kornfraktion 12 und die zweite Kornfraktion 3 werden jeweils auf einem Schüttkegel aufgehäuft.

Die Förderung des Inputmaterials 2 vom Bunker 4 zum Grobabscheider 8 erfolgt kontinuierlich über eine erste Transporteinrichtung 5.1, 5.2, die in der Ausführungsvariante gemäß Figur 1 aus einem ersten Abschnitt 5.1 und einem zweiten Abschnitt 5.2 besteht. Die Transporteinrichtungen der Anlage 1 können grundsätzlich beliebig ausgestaltet sein. In der Ausführungsvariante gemäß Figur 1 sind sie als laufendes Transportband realisiert. Sie können alternativ auch durch eine rotierende Transportschnecke gebildet sein. Ferner kann es auch die Kombination aus Transportband und Transportschnecke geben.

Der erste Abschnitt 5.1 der ersten Transporteinrichtung ist in seiner Fördergeschwindigkeit einstellbar insbesondere geregelt, um die Menge an Inputmaterial 2, die pro Zeit verarbeitet wird bzw. zur Siebmaschine 9 transportiert wird, einzustellen. Hierzu ist dem ersten Abschnitt 5.1 ein Motor M zugeordnet, der von einer Anlagensteuerung 15 angesteuert wird, um dessen Drehzahl, mithin die Fördergeschwindigkeit der ersten Transporteinrichtung 5.1, 5.2 einzustellen. Der zweite Abschnitt 5.2 der ersten Transporteinrichtung wird demgegenüber mit einer festen Geschwindigkeit betrieben. Es ist möglich, dass alle oder nur einen Teil der Transporteinrichtungen der Siebanlage 1in ihrer Geschwindigkeit einstellbar sind.

Eine zweite Transporteinrichtung 6, bzw. zweites Transportband, fördert die von Überkorn 13 befreite Restfraktion 14 des Inputmaterials 2, die der Grobabscheider 8 ausgibt, kontinuierlich zur Siebmaschine 9. Und eine dritte Transporteinrichtung 7, bzw. ein drittes Transportband, fördert die von der Restfraktion 14 abgesiebte zweite Kornfraktion 3, die die Siebmaschine 9 ausgibt, kontinuierlich zu einem Schüttkegel.

Dem ersten Abschnitt 5.1 der ersten Transporteinrichtung und der dritten Transporteinrichtung 7 ist jeweils eine Waage 10, 11 zugeordnet, um das Gewicht des jeweils geförderten Schüttguts zu bestimmen. Dies kann im laufenden Betrieb erfolgen, wobei die Gewichtswerte zu jedem Zeitpunkt vorliegen und zu integrieren bzw. aufzusummieren sind, um die nach einer bestimmten Zeit insgesamt geförderte Menge an Material zu ermitteln. Die Messwerte der Wagen 10, 11 sind der Anlagensteuerung 15 zugeführt, welche diese auswerten, insbesondere ins Verhältnis setzen kann.

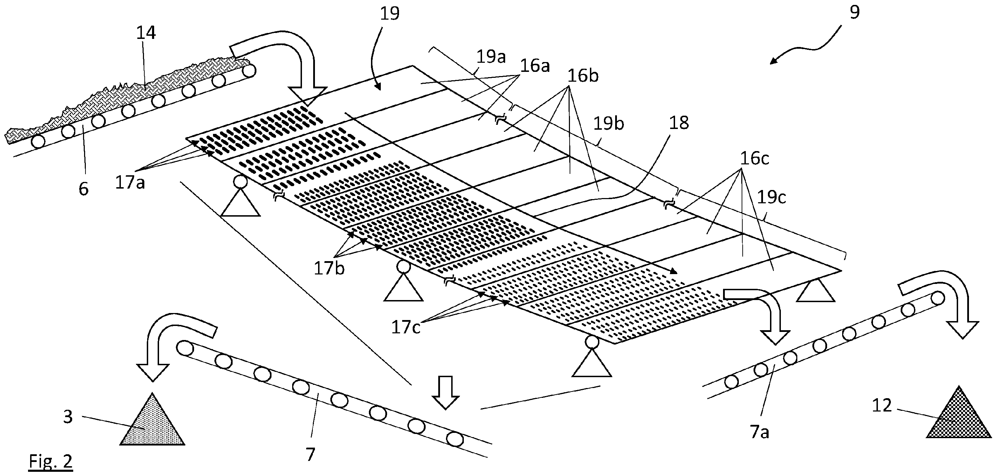

Wie Figur 2 genauer darstellt, weist die Siebmaschine 9 eine in eine Arbeitsrichtung 18 zumindest abschnittsweise abwärts gerichtete Siebfläche 19 auf, die im Betrieb schwingt. Die Siebfläche 19 besteht in dieser Ausführungsvariante aus einem ersten Siebbereich 19a mit einer ersten Lochung, einem in Arbeitsrichtung 18 dahinterliegenden zweiten Siebbereich 19b mit einer zweiten Lochung und einem in Arbeitsrichtung 18 wiederum dahinterliegenden dritten Siebbereich 19c mit einer dritten Lochung. Jede der Lochungen wird durch jeweils eine Anordnung einer Vielzahl an Sieblöchern mit bestimmten Abmessungen gebildet. Die Lochung des zweiten Siebbereichs 19b besteht aus Sieblöchern 17b, die in wenigstens eine Richtung eine geringere Abmessung haben, als die Sieblöcher 17a der ersten Lochung. Ferner besteht die Lochung des dritten Siebbereichs 19c aus Sieblöchern 17c, die in wenigstens eine Richtung eine geringere Abmessung haben, als die Sieblöcher 17b der zweiten Lochung. Mit anderen Worten wird die Lochung von Siebbereich zu Siebbereich allmählich kleiner.

Die Sieblöcher 17a, 17b, 17c haben die Gestalt von Langlöchern, deren Längsachse parallel zur Arbeitsrichtung 18 orientiert ist. Die Abmessungen dieser Langlöcher beziehen sich auf die Länge ihrer Längsachse sowie ihre Breite. In Figur 2 sind die Sieblöcher hinsichtlich ihrer Form, Größe und Anordnung nur exemplarisch und nur im linken Teil der Siebfläche 19 dargestellt. Entsprechende Sieblöcher 17a, 17b, 17c befinden sich selbstverständlich auch im rechten Teil der Siebfläche 19, mithin auf der gesamten Siebfläche 19. Die Anordnung der Sieblöcher 17a, 17b, 17c ist symmetrisch in Reihen.

Die Siebfläche 19 ist insgesamt leicht konkav gebogen. Sie ist schwingend gelagert und besteht aus einer Anzahl von beispielsweise 21 einzelnen länglichen, schmalen Siebelementen, nachfolgend Einzelsiebe 16a, 16b, 16c genannt. Die Einzelsiebe 16a, 16b, 16c sind ca. 3m lang und ca. 25-30cm breit. Sie liegen mit ihrer Längsseite unmittelbar aneinander, so dass ihre Querrichtung, d.h. die Richtung ihrer Breite der Arbeitsrichtung 18 entspricht. Die Einzelsiebe 16a, 16b, 16c sind elastische Siebmatten aus elastomerem Polyurethan.

Die Lochung der Einzelsiebe 16a, 16b, 16c bildet die Lochung des entsprechenden Siebbereichs 19a, 19b, 19c. Die Einzelsiebe 16a, 16b, 16c gehören somit einer von drei Gruppen an, die jeweils eine erste, zweite und dritte Lochung haben, wobei die zweite Lochung in wenigstens einer Erstreckungsrichtung der Sieblöcher 17b kleiner als die erste Lochung und die dritte Lochung in wenigstens einer Erstreckungsrichtung der Sieblöcher 17c kleiner als die zweite Lochung ist. Dabei bilden die Einzelsiebe 16a der ersten Gruppe den ersten Siebbereich 19a, die Einzelsiebe 16b der zweiten Gruppe den zweiten Siebbereich 19b und die Einzelsiebe 19c der dritten Gruppe den dritten Siebbereich 19c, der in Arbeitsrichtung 18 hinter dem zweiten Siebbereich 19b folgt, welcher wiederum hinter dem ersten Siebbereich 19a liegt. Mit anderen Worten besteht der erste Siebbereich 19a aus einer Anzahl von Einzelsieben 16a mit der ersten Lochung, der zweite Siebbereich 19b aus einer Anzahl von Einzelsieben 16b mit der zweiten Lochung und der dritte Siebbereich 19c aus einer Anzahl von Einzelsieben 16c mit der dritten Lochung.

In der Ausführungsvariante gemäß Figur 2 sind nicht alle Einzelsiebe 16a, 16b, 16c dargestellt. Rein exemplarisch bilden zehn Einzelsiebe 16a mit der ersten Lochung, fünf Einzelsiebe 16b mit der zweiten Lochung und sechs Einzelsiebe 16c mit der dritten Lochung die Siebfläche 19. Dabei weist die erste Lochung Sieblöcher 17a mit einer Lochabmessung von 5x25mm, die zweite Lochung Sieblöcher 17b mit einer Lochabmessung von 3x20mm und die dritte Lochung Sieblöcher 17c mit einer Lochabmessung von 3x10mm auf. Durch die Lochung und Anzahl der Einzelsiebe 16a, 16b, 16c wird somit eine spezifische Siebfolge definiert.

Eine andere Siebfolge der Siebmaschine 9 ist beispielsweise:
- vier Einzelsiebe 16a mit der ersten Lochung, deren Sieblöcher 17a eine Lochabmessung von 7x25mm aufweisen;
- fünfzehn Einzelsiebe 16b mit der zweiten Lochung, deren Sieblöcher 17b eine Lochabmessung von 5x25mm aufweisen;
- zwei Einzelsiebe 16c mit der dritten Lochung, deren Sieblöcher 17c eine Lochabmessung von 2x20mm aufweisen.

Die Lochungen sind somit stets größer als die nominale Korngröße 0-2mm. Denn es bilden sich am Lochrand Ablagerungen, so dass die effektive Lochung kleiner ist. Durch die Tatsache, dass auch Material größerer Körnung, d.h. 2-45mm auf der Siebfläche 19 liegt, werden diese Ablagerungen wieder abgetragen, so dass die Sieblöcher 16a, 16b, 16b nicht zuwachsen, sondern freibleiben.

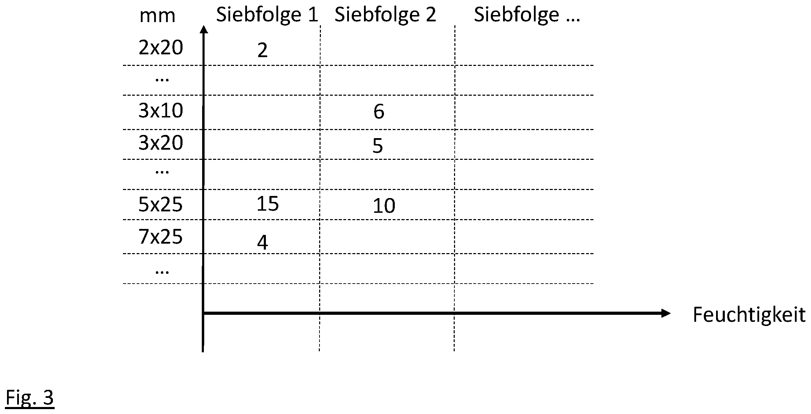

Die beiden genannten Siebfolgen sind in der Tabelle gemäß Figur 3 angegeben. Untersuchungen haben gezeigt, dass die darin erstgenannte Siebfolge bei feuchterem Inputmaterial 2 und die andere Siebfolge bei vergleichsweise trockenem Inputmaterial geeignet ist, um einen vergleichsweise hohen Ertrag an Kultursubtrat 3 aus dem Inputmaterial 2 zu gewinnen. Die Leitfähigkeit des Inputmaterials 2 lässt sich leicht messtechnisch erfassen und ermöglicht eine Aussage zum Feuchtigkeitsgehalt und zur Salzkonzentration des Materials, da Wasser die im Boden befindlichen Ionen löst und deren Transport unter dem Einfluss eines elektrischen Feldes ermöglicht.

Wie aus Figur 2 weiter ersichtlich ist, fallen die 0-2mm Körner der das Kultursubtrat 3 bildenden zweiten Kornfraktion 3 in der Fraktion 14 des Inputmaterials 2 durch die Sieblöcher 17a, 17b, 17c und werden von einer dritten Transporteinrichtung 7 in Gestalt eines Transportbands von der Siebmaschine 9 weggebracht und auf einen Schüttkegel aufgeworfen. Die nicht durch die Sieblöcher 17a, 17b, 17c passenden größeren Körner mit Korngrößen zwischen 2 und 45mm sowie nicht abgesiebte 0 bis 2mm Körner werden in Arbeitsrichtung 18 transportiert und fallen am Ende der Siebfläche 19 von dieser herunter. Sie bilden die erste Kornfraktion 12 und werden von einer vierten Transporteinrichtung 7a in Gestalt eines Transportbands von der Siebmaschine 9 ebenfalls weggebracht und auf einen Schüttkegel aufgeworfen. Die erste Kornfraktion 12 kann ebenfalls einer gesonderten Verwendung zugeführt werden. Sinnvollerweise erfolgt die Lagerung der ersten Kornfraktion 12 und der zweiten Kornfraktion 3 an einem überdachten Ort, um sie gegen Regen und Nässe zu schützen.

Falls das Siebergebnis nicht zufriedenstellend ausfällt, d.h. der prozentuale Anteil der gewonnenen zweiten Kornfraktion 3 (0-2mm) im Verhältnis zum Inputmaterial 2 oder zur ersten Kornfraktion 12 zu gering ist, beispielsweise weniger als 30% beträgt, kann der Siebvorgang wiederholt werden, indem die erste Kornfraktion 12 zurück in den Bunker 4 gegeben und erneut der Siebmaschine 9 zugeführt wird. Dabei kann auch der Durchsatz der Siebmaschine 9, respektive die der Siebmaschine 9 zugeführte Menge an Inputmaterial 2 pro Zeit, verringert werden, indem die Geschwindigkeit V_{Band} des ersten Abschnitts der ersten Transporteinrichtung 5.1 verringert wird. Wie Figur 1 veranschaulicht, kann das besagte Verhältnis (Kornverhältnis) der Anlagensteuerung 15 zugeführt werden, die dann die entsprechende Geschwindigkeitsanpassung vornimmt.

Als Siebmaschine 9 kann beispielsweise eine Spannwellensiebmaschine verwendet werden, wie sie in der internationalen Anmeldung WO 2007/060155 A1 beschrieben ist. Bei einer Breite von 6m können bei einem solchen Modell zwei der zuvor beschriebenen Einzelsiebe 16a, 16b, 16c jeweils paarweise an ihrem kopfseitigen Ende aneinandergelegt werden, um die Siebfläche 19 zu bilden. Diese Siebmaschine 9 besteht aus einem einzigen Siebdeck und kann über eine 10°-18° abwärts geneigte Siebfläche 19 verfügen, die bananenförmig (konkav) gebogen ist. Die Schwingung der Siebfläche 19 ist bevorzugt vertikal entlang einer elliptischen Bahn mit einer Frequenz von beispielsweise 800 min^{-1.} Die Erregung dieser Frequenz kann durch einen Wellenantrieb mit Einfachunwucht erfolgen. Somit bildet die Siebfläche 19 einen Freischwinger mit Kreisamplitude und einer durch Resonanz erregten, überlagerten Ellipsenamplitude.

Das Inputmaterial 2 ist steiniger, sandiger oder lehmiger Bodenaushub von Baugruben oder Bodendeponien mit mineralischen Bestandteilen wie Feinsand, Schluff und Ton und organischen Bestandteilen, insbesondere Humus. Es kann vor der Beschickung des Bunkers 4 zu einem Schüttkegel aufgehäuft werden, von dem aus der Bunker 4 dann beschickt wird.

Da der Sieberfolg, d.h. die gewinnbare Menge an 0-2mm Kornfraktion 3 vom Inputmaterial 2 wesentlich von der Feuchtigkeit des Inputmaterials 2 und der Luftfeuchtigkeit abhängt, kann das Inputmaterial 2 einer Vorverarbeitung unterzogen werden. Eine solche Vorverarbeitung ist auch dann anzuraten, wenn der Ertrag an Kultursubstrat 3, d.h. der prozentuale Anteil der zweiten Kornfraktion 3 (0-2mm) bezogen auf die Menge an Inputmaterial 2 oder bezogen auf die erste Kornfraktion 12 zu gering ist.

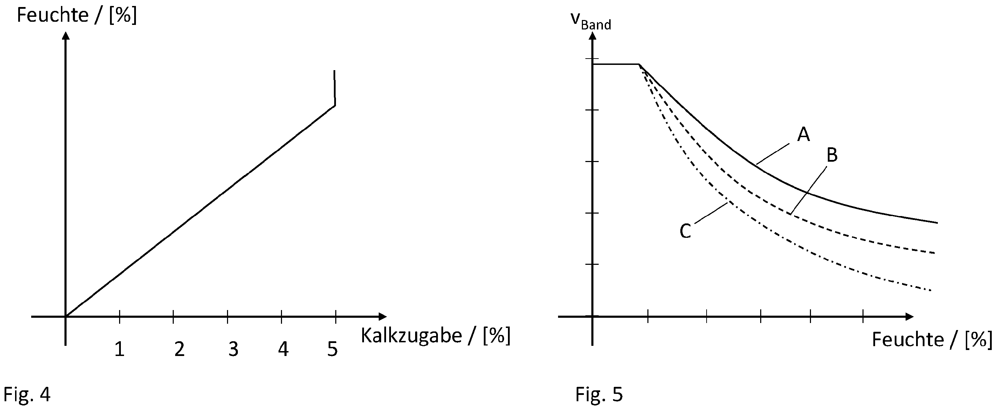

Dies erfolgt in Gestalt einer dosierten Zugabe von unhydriertem Kalk, insbesondere Weißfeinkalk, oder eines Kalk-Zement-Mischbinders wie DOROSOL^{®} C, wobei die Menge an Kalk zwischen 0,5% und 5% der Menge des Inputmaterials beträgt und die obere Grenze von 5% nicht überschreiten darf. Dies veranschaulicht Figur 4. Kalk wird somit in Abhängigkeit der Feuchte zugegeben. DOROSOL^{®} C besteht aus Weißfeinkalk (EN 459), Portlandzementklinker (EN 197) und Füllern. Der Anteil an Weißfeinkalk im Bindemittel sollte etwa 70% betragen.

Die Kalkzugabe kann in Form von sogenannten BigBags erfolgen, die auf dem Schüttkegel entleert und mittels eines Schaufel-Radladers untergemischt werden. Es ist allerdings auch möglich, den Bunker 4 mit einer steuerbaren Einrichtung zur dosierbaren Zugabe des Kalks sowie mit einem Mischwerk auszustatten, z.B. einer drehenden Schaufel.

Für eine Bewertung des Langzeitverhaltens des Inputmaterials 2 kann nach der Kalkzugabe eine Prüfung seines pH-Wertes durchgeführt werden. Liegt ein pH-Wert kleiner 11 vor, so besteht die Gewähr, dass kein ungebundenes beziehungsweise kein reaktionsfähiges Calciumhydroxid mehr im Inputmaterial 2 vorhanden ist. Dadurch ist keine puzzolanische Reaktion mehr möglich, und das Inputmaterial 2 bleibt grabfähig und streufähig.

Infolge der Kalkzugabe entsteht im Inputmaterial 2 in geringen Mengen Calciumhydroxid. Um dieses zu neutralisieren, ist es sinnvoll, das Inputmaterial vor oder nach der Kalkzugabe gut zu belüften. Dadurch reagiert das Calciumhydroxid mit dem Kohlendioxid (CO₂) der Luft, indem das Calciumhydroxid kationisiert und dadurch inaktiv wird. Die Reaktionszeit beträgt mindestens 4 Stunden.

Kalkhydrat + Wasser + Kohlendioxid > Kalziumkarbonat + Wasser Ca(OH)₂ + H₂O + C0₂ > CaC0₃ + H₂0

Um diese Belüftung zu erreichen, kann das Inputmaterial im einfachsten Fall mit einem sogenannten Schaufel-Separator, wie er als Sonderausrüstung für Hydraulikbagger oder Schaufel-Radlader erhältlich ist, oder mit ähnlichen Sonderausrüstungen aufbereitet werden, durch die ein hoher Aufschluss des Inputmaterials 2 beim Mischen erreicht wird. Dieser Effekt kann auch durch stationäre, mobil oder semimobil aufgebaute Vorrichtungen, die entsprechend ausgelegt sind, wie zum Beispiel sogenannte Scheiben-Separatoren nach dem Scheibe-in-Scheibe-Prinzip oder vergleichbare mechanische Vorrichtungen erreicht werden. Das Ineinandergreifen der Scheiben und Meißel schließt das Inputmaterial 2 bestmöglich auf, das anschließend mit dem Kalk vermischt und dieser im Inputmaterial vergleichmäßigt werden kann. Darüber hinaus können sich die Scheibenzwischenräume auch bei sehr feucht-bindigen bzw. pampigen Böden nie zusetzen, weil diese ständig von den jeweils gegenüberliegenden Scheiben freigeschnitten werden. Es ist ferner möglich, Luft von unten durch den Bunker 4 strömen zu lassen. Ist dann zusätzlich das Mischwerk in Betrieb, erfolgt ebenfalls eine gute Durchlüftung des Inputmaterials 2.

Mit der Karbonatisierung (Umwandlung des Kalkhydrats in Kalziumkarbonat) wird die puzzolanische Reaktion gewissermaßen gestoppt. Das ist immer der Fall, wenn der Anteil von ungebundenem Kalk so gering ist, dass keine Hydratphasen mehr gebildet werden können und die puzzolanische Reaktion nicht fortgesetzt werden kann.

Wie bereits angesprochen, ist eine Messgröße für die Qualität der Vorbereitung des Inputmaterials durch Kalkzugabe und Durchlüftung der pH-Wert, der infolge der Karbonatisierung sinkt. Dieser Nachweis für den Erfolg der Verbesserung des Inputmaterials kann auf einer Baustelle, bzw. am Aufstellort der Anlage, mit einer in Wasser gelösten Bodenprobe und Lackmus-Papier leicht erbracht werden.

Zusätzlich hat der Schaufelseparator auch eine Siebfunktion, damit die für die weitere Verwendung vorgeschriebenen Körnungen in Verbindung mit dem Mischvorgang erzeugt werden können. Diese Körnungen werden in Abhängigkeit der individuellen Scheibenabstände der Separatorwellen ermöglicht.

Sofern der Ertrag an Kultursubstrat 3, d.h. der prozentuale Anteil der zweiten Kornfraktion 3 (0-2mm) bezogen auf die Menge an Inputmaterial 2 oder bezogen auf die erste Kornfraktion 12 zu gering ist, nach der Vorverarbeitung des Inputmaterials 2 zu gering ist oder weiterhin zu gering ist, kann die Zugabe von Kalk samt anschließender Belüftung und Ruhenlassen des Inputmaterials 2 wiederholt werden.

Des Weiteren ist zu beachten, dass sich am Schüttkegel der zweiten Kornfraktion 3 kein Kranz gröberer Körner bildet. Ist dies der Fall, so muss die zugeführte Menge an Inputmaterial reduziert werden, also die Geschwindigkeit V_{Band} des ersten Abschnitts 5.1 der ersten Transporteinrichtung 5 verringert werden. Ob ein solcher Kranz vorhanden ist, kann der Anlagensteuerung 15 mitgeteilt werden, siehe Figur 1, die daraufhin eine entsprechende Geschwindigkeitsänderung vornimmt. Zudem sollte stets ein Anteil von 1-2 % Feinkorn, d.h. der zweiten Kornfraktion 3 (0-2mm), im Mittelkorn, d.h. in der ersten Kornfraktion 12 verbleiben.

Ein weiterer Parameter für die Steuerung der Anlage 1 ist die Feuchtigkeit des Inputmaterials 2. Diese kann z.B. im Bunker 4 anhand der elektrischen Leitfähigkeit des Inputmaterials 2 ermittelt und der Anlagensteuerung 15 zugeführt werden. Je feuchter das Inputmaterial ist, desto langsamer muss die Anlage 1 laufen, was von der Anlagensteuerung 15 entsprechend eingestellt werden kann. Andernfalls wird zu wenig Kultursubstrat 3 gewonnen. Die tatsächliche Inputmenge pro Zeit bzw. Bandgeschwindigkeit V_{Band} ist also eine Funktion seiner Feuchte (in %) und des Anteils an Feinkorn im Mittelkorn. Schematisch zeigt Figur 5 diesen Zusammenhang. Dabei beschreibt Kurve A den Fall, dass zu wenig Feinkorn im Mittelkorn und Kurve C, dass zu viel Feinkorn im Mittelkorn verbleibt. Kurve B beschreibt den optimalen Fall zwischen diesen genannten Grenzfällen.

Das erfindungsgemäß gewonnene Kultursubstrat 3 kann gelagert und anschließend für die Herstellung von Blumen- oder Pflanzenerde verwendet werden.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

1. Anlage
2. Inputmaterial
3. Kultursubstrat, zweite Kornfraktion, Feinkorn
4. Bunker, Einfülltrichter
5. erste Transporteinrichtung, Transportband
5.1 erster Abschnitt einer ersten Transporteinrichtung, Band
5.2 zweiter Abschnitt der ersten Transporteinrichtung, Band
6 zweite Transporteinrichtung, Transportband
7 dritte Transporteinrichtung, Transportband
7a vierte Transporteinrichtung, Transportband
8 erste Siebstufe, Grobabscheider
9 Siebmaschine
10 Waage für Inputmaterial
11 Waage für Kultursubstrat
12 erste Kornfraktion
13 Überkorn
14 Fraktion des Inputmaterials
15 Anlagensteuerung
16a Einzelsieb mit erster Lochung
16b Einzelsieb mit zweiter Lochung
16c Einzelsieb mit dritter Lochung
17a Siebloch der ersten Lochung
17b Siebloch der zweiten Lochung
17c Siebloch der dritten Lochung
18 Arbeitsrichtung
19 Siebfläche
19a erster Siebbereich
19b zweiter Siebbereich
19c dritter Siebbereich

## Patentansprüche

1. Verfahren zur Gewinnung eines feinkrümeligen Kultursubstrats (3) für die Herstellung von Blumen- oder Pflanzenerde oder für die Ausbringung auf einem oder Einbringung in einen Kulturboden im Garten- und Landschaftsbau oder in der Landwirtschaft, wobei die Gewinnung aus einem Inputmaterial (2) in Form von Bodenaushub einer Bodendeponie oder Baugrube erfolgt und das Inputmaterial mineralische und organische Bestandteile aufweist, wobei das Inputmaterial (2) oder zumindest eine Fraktion (14) des Inputmaterials (2) einer Siebmaschine (9) zugeführt wird, die das Inputmaterial (2) oder die Fraktion (14) in eine erste Kornfraktion (12) und eine das feinkrümelige Kultursubstrat (3) bildende zweite Kornfraktion (3) mit einer Korngröße im Wesentlichen kleiner gleich 2mm auftrennt, indem das Inputmaterial (2) oder die Fraktion (14) in der Siebmaschine (9) über eine in eine Arbeitsrichtung (18) zumindest abschnittsweise abwärts gerichtete, schwingende Siebfläche (19) transportiert wird, die wenigstens einen ersten Siebbereich (19a) mit einer ersten Lochung oder Maschenweite, und einen in Arbeitsrichtung (18) dahinter liegenden zweiten Siebbereich (19b) mit einer zweiten Lochung oder Maschenweite umfasst, deren Löcher (17b) oder Maschen in wenigstens eine Richtung eine geringere Abmessung haben, als die Löcher (17a) oder Maschen der ersten Lochung, und anschließend das gewonnene Kultursubstrat (3) als Zuschlagstoff zur Herstellung der Blumen- oder Pflanzenerde oder zur Aus- oder Einbringung auf oder in den Kulturboden verwendet wird.

2. Verfahren nach Anspruch 1, **dadurch gekennzeichnet, dass** das Inputmaterial (2) einer optischen Prüfung unterzogen wird, bei der die Farbe und/ oder Helligkeit des Inputmaterials (2) untersucht wird, wobei das Inputmaterial (2) nur dann verwendet wird, wenn dessen Farbe dunkelbraun bis schwarz ist oder dessen Farbhelligkeit unter einem bestimmten Grenzwert liegt.

3. Verfahren nach Anspruch 1 oder 2, **dadurch gekennzeichnet, dass** das Inputmaterial (2) einer olfaktorischen Prüfung unterzogen wird, bei der der Geruch des Inputmaterials (2) untersucht wird, wobei das Inputmaterial (2) nur dann für das erfindungsgemäße Verfahren verwendet wird, wenn wenigstens ein bestimmter Duftstoff im Inputmaterial (2) vorhanden ist, wie beispielsweise 2-Methyl-Iso-Borneol und/ oder Geosmin, oder einen bestimmten Grenzwert überschreitet.

4. Verfahren nach einem der vorherigen Ansprüche, **dadurch gekennzeichnet, dass** die der Siebmaschine (9) zugeführte Menge an Inputmaterial (2) pro Zeit reduziert wird, wenn die Menge des insgesamt gewonnenen Kultursubstrats (3) im Verhältnis zur Menge des Inputmaterials (2) oder zur Menge der ersten Kornfraktion (12) unter einem Grenzwert von beispielsweise 50% liegt.

5. Verfahren nach einem der vorherigen Ansprüche, **dadurch gekennzeichnet, dass** die der Siebmaschine (9) zuzuführende Menge an Inputmaterial (2) pro Zeit dadurch reduziert wird, dass die Fördergeschwindigkeit zumindest eines Abschnitts einer Transporteinrichtung (5) verringert wird, die die Siebmaschine (9) beschickt.

6. Verfahren nach einem der vorherigen Ansprüche, **dadurch gekennzeichnet, dass** vor der Zuführung des Inputmaterials (2) zur Siebmaschine (9) eine Abscheidung eines Überkorns (13) erfolgt, insbesondere mit einer Korngröße größer als 45mm.

7. Verfahren nach einem der vorherigen Ansprüche, **dadurch gekennzeichnet, dass** die Schwingung der Siebfläche durch eine vertikale auf und ab Bewegung erreicht wird, insbesondere entlang einer elliptischen Bahn.

8. Verfahren nach einem der vorherigen Ansprüche, **dadurch gekennzeichnet, dass** die Feuchtigkeit des Inputmaterials (2) oder eine davon abhängige Größe bestimmt und die Lochungen des wenigstens einen und zweiten Siebbereichs (19a, 19b, 19c) in Abhängigkeit der Feuchtigkeit oder der davon abhängigen Größe ausgewählt und verwendet werden, wobei bei einer höheren Feuchtigkeit eine im Wesentlichen größere Lochung und bei einer geringeren Feuchtigkeit eine im Wesentlichen kleinere Lochung verwendet wird.

9. Verfahren nach einem der vorherigen Ansprüche, **dadurch gekennzeichnet, dass** die Feuchtigkeit des Inputmaterials (2) bestimmt und diesem in Abhängigkeit der Feuchtigkeit Kalk, insbesondere Weißfeinkalk zugegeben wird.

10. Verfahren nach Anspruch 9, **dadurch gekennzeichnet, dass** die Zugabe von Kalk maximal 5 Gewichtsprozente des Inputmaterials (2) beträgt.

11. Verfahren nach einem der vorherigen Ansprüche, **dadurch gekennzeichnet, dass** die Feuchtigkeit der zweiten Kornfraktion (3) bestimmt und in Abhängigkeit der Feuchtigkeit die Menge an der Siebmaschine (9) zugeführtem Inputmaterial (2) pro Zeit angepasst wird.

12. Verfahren nach einem der vorherigen Ansprüche, **dadurch gekennzeichnet, dass** die elektrische Leitfähigkeit des Inputmaterials (2) gemessen wird und daraus die Feuchtigkeit bestimmt wird.

13. Verfahren nach einem der vorherigen Ansprüche, **dadurch gekennzeichnet, dass** die zweite Kornfraktion (3) auf einen Schüttkegel geworfen wird und die der Siebmaschine (9) zugeführte Menge an Inputmaterial (2) pro Zeit reduziert wird, wenn sich zunehmend ein Kranz gröberer Körner am Fuße des Schüttkegels bildet.

14. Verfahren nach einem der vorherigen Ansprüche, **dadurch gekennzeichnet, dass** das Kultursubstrat (3) zur Herstellung der Blumen- oder Pflanzenerde mit Komposterde, Mutterboden und/oder Torf sowie mit wenigstens einem Zuschlagstoff wie beispielsweise Kalk, Düngemittel und/ oder Sand gemischt wird.

## Claims

1. Method for the preparation of a finely crumbled growing medium (3) for the production of flower soil or potting soil, or for spreading onto or working into topsoil in horticulture and landscaping or in agriculture, in which preparation is realised using an input material (2) in the form of excavated soil from a soil deposit or excavation pit and the input material contains mineral and organic constituents, and in which the input material (2) or at least a fraction (14) of the input material (2) is supplied to a screening machine (9) that separates the input material (2) or the fraction (14) into a first grain fraction (12) and a second grain fraction (3) forming the finely crumbled growing medium (3) with a grain size that is largely smaller than 2 mm, by means of transporting the input material (2) or the fraction (14) in the screening machine (9) over a vibrating screen surface (19) that, at least in sections, is tilted downward in a working direction (18) and comprises at least a first screening section (19a) with a first perforation or mesh size and a second screening section (19b) located downstream in the working direction (18) with a second perforation or mesh size, the holes (17b) or mesh of which, in at least one direction, have a smaller size than the holes (17a) or mesh of the first perforation, and in which the prepared growing medium (3) is subsequently used as an additive for the production of flower soil or potting soil, or for spreading onto or working into topsoil.

2. Method according to claim 1, **characterised by** performing a visual inspection of the input material (2), in which the colour and/or brightness of the input material (2) is examined and the input material (2) is only used if its colour is dark brown to black or its colour brightness is below a certain limit value.

3. Method according to claim 1 or 2, **characterised by** performing olfactory testing of the input material (2), in which the odour of the input material (2) is examined and the input material (2) is only used for the method according to the present invention if at least one certain scent is present in the input material (2), for example, 2-methylisoborneol and/or geosmin, or exceeds a certain limit value.

4. Method according to one of the preceding claims, **characterised by** the amount of input material (2) supplied to the screening machine (9) per unit of time being reduced if the total quantity of growing medium (3) obtained in proportion to the quantity of the input material (2) or the quantity of the first grain fraction (12) lies below a limit value, for example, 50%.

5. Method according to one of the preceding claims, **characterised by** the amount of input material (2) supplied to the screening machine (9) per unit of time being reduced by reducing the transport speed of at least one section of a transport device (5) that supplies the screening machine (9).

6. Method according to one of the preceding claims, **characterised by** the separation of an oversized grain fraction (13), notably with a grain size larger than 45 mm, prior to the supply of the input material (2) to the screening machine (9).

7. Method according to one of the preceding claims, **characterised by** the vibration of the screen surface being achieved by means of a vertical up and down movement, notably along an elliptical path.

8. Method according to one of the preceding claims, **characterised by** the moisture content of the input material (2) or a parameter depending on the same being determined and the perforations of the at least first and second screening sections (19a, 19b, 19c) being selected and used depending on the moisture content or a parameter depending on the same, in which a fundamentally larger perforation is used in case of a higher moisture content and a fundamentally smaller perforation is used in case of a lower moisture content.

9. Method according to one of the preceding claims, **characterised by** the moisture content of the input material (2) being determined and lime, notably quicklime, being added depending on the moisture content.

10. Method according to claim 9, **characterised by** the addition of lime at a maximum of 5 percent by weight of the input material (2).

11. Method according to one of the preceding claims, **characterised by** the moisture content of the second grain fraction (3) being determined and the amount of input material (2) supplied to the screening machine (9) per unit of time being adjusted depending on the moisture content.

12. Method according to one of the preceding claims, **characterised by** the electrical conductivity of the input material (2) being measured and used to determine the moisture content.

13. Method according to one of the preceding claims, **characterised by** the second grain fraction (3) being thrown onto a material cone and the amount of input material (2) supplied to the screening machine (9) per unit of time being reduced if a ring of coarser grains increasingly forms at the base of the material cone.

14. Method according to one of the preceding claims, **characterised by** the growing medium (3) being mixed with compost, topsoil and/or peat as well as at least one additive, for example, lime, fertiliser, and/or sand for the production of the flower soil or potting soil.

## Revendications

1. Procédé d'obtention d'un substrat de culture (3) finement grumeleux pour la fabrication de terreau pour fleurs ou plantes ou pour l'épandage sur ou dans un sol de culture dans l'horticulture et le paysagisme ou dans l'agriculture, sachant que l'obtention s'effectue à partir d'un matériau d'entrée (2) sous forme de terre excavée d'un dépôt de sol ou d'une excavation de construction et que le matériau d'entrée présente des composants minéraux et organiques, sachant que le matériau d'entrée (2) ou au moins une fraction (14) du matériau d'entrée (2) est amené(e) à une tamiseuse (9) séparant le matériau d'entrée (2) ou la fraction (14) en une première fraction granulaire (12) et en une deuxième fraction granulaire (3) formant le substrat de culture (3) finement grumeleux et ayant une taille de grain sensiblement inférieure ou égale à 2 mm, en transportant le matériau d'entrée (2) ou la fraction (14) dans la tamiseuse (9) sur une surface de tamisage (19) oscillante, orientée vers le bas au moins par sections dans une direction de travail (18), qui comprend au moins une première zone de tamisage (19a) avec une première perforation ou largeur de maille, et une deuxième zone de tamisage (19b) située derrière dans la direction de travail (18) avec une deuxième perforation ou largeur de maille, dont les trous (17b) ou les mailles ont, dans au moins une direction, une dimension inférieure à celle des trous (17a) ou des mailles de la première perforation, et ensuite le substrat de culture (3) obtenu est utilisé comme additif pour la fabrication du terreau pour fleurs ou plantes ou pour l'extraction ou l'introduction sur ou dans le sol de culture.

2. Procédé selon la revendication 1, **caractérisé en ce que** le matériau d'entrée (2) est soumis à un examen optique au cours duquel la couleur et/ou la luminosité du matériau d'entrée (2) est examinée, sachant que le matériau d'entrée (2) n'est utilisé que si sa couleur est brun foncé à noir ou si sa luminosité de couleur est inférieure à une valeur limite déterminée.

3. Procédé selon la revendication 1 ou 2, **caractérisé en ce que** le matériau d'entrée (2) est soumis à un test olfactif dans lequel l'odeur du matériau d'entrée (2) est examinée, sachant que le matériau d'entrée (2) n'est utilisé pour le procédé selon l'invention que si au moins une substance odorante particulière, comme le 2-méthyl-iso-borneol et/ou la géosmine, est présente dans le matériau d'entrée (2) ou dépasse une valeur limite particulière.

4. Procédé selon l'une quelconque des revendications précédentes, **caractérisé en ce que** la quantité de matériau d'entrée (2) alimentant la tamiseuse (9) est réduite par temps lorsque la quantité de substrat de culture (3) totale obtenue par rapport à la quantité de matériau d'entrée (2) ou à la quantité de la première fraction granulaire (12) est inférieure à une valeur limite, par exemple de 50%.

5. Procédé selon l'une quelconque des revendications précédentes, **caractérisé en ce que** la quantité de matériau d'entrée (2) par temps à fournir à la tamiseuse (9) est réduite en réduisant la vitesse de transport d'au moins une partie d'un dispositif de transport (5) alimentant la tamiseuse (9).

6. Procédé selon l'une des revendications précédentes, **caractérisé en ce que,** avant d'amener le matériau d'entrée (2) à la tamiseuse (9), une séparation d'un surgrain (13) est réalisée, notamment si sa granulométrie est supérieure à 45 mm.

7. Procédé selon l'une quelconque des revendications précédentes, **caractérisé en ce que** l'oscillation de la surface de tamisage est obtenue par un mouvement vertical de haut en bas, plus particulièrement le long d'une trajectoire elliptique.

8. Procédé selon l'une des revendications précédentes, **caractérisé en ce que** l'on détermine l'humidité du matériau d'entrée (2) ou une grandeur qui en dépend, et **en ce que** l'on sélectionne et utilise les perforations d'au moins une première et deuxième zone de criblage (19a, 19b, 19c) en fonction de l'humidité ou de la grandeur qui en dépend, sachant que l'on utilise une perforation sensiblement plus grande si l'humidité est plus élevée et une perforation sensiblement plus petite si l'humidité est plus faible.

9. Procédé selon l'une des revendications précédentes, **caractérisé en ce que** l'humidité du matériau d'entrée (2) est déterminée et de la chaux, en particulier de la chaux fine blanche, est ajoutée à celui-ci en fonction de l'humidité.

10. Procédé selon la revendication 9, **caractérisé en ce que** l'addition de chaux représente au maximum 5% en poids du matériau d'entrée (2).

11. Procédé selon l'une des revendications précédentes, **caractérisé en ce que** l'humidité de la deuxième fraction granulaire (3) est déterminée et qu'en fonction de l'humidité, la quantité de matière d'entrée (2) amenée à la tamiseuse (9) par temps est adaptée.

12. Procédé selon l'une des revendications précédentes, **caractérisé en ce que** la conductivité électrique du matériau d'entrée (2) est mesurée et que l'humidité est déterminée à partir de cette mesure.

13. Procédé selon l'une des revendications précédentes, **caractérisé en ce que** la deuxième fraction granulaire (3) est jetée sur un cône de déversement et **en ce que** la quantité de matériau d'entrée (2) amenée à la tamiseuse (9) est réduite par temps au fur et à mesure qu'une couronne de grains plus grossiers se forme progressivement au pied du cône de déversement.

14. Procédé selon l'une des revendications précédentes, **caractérisé en ce que** le substrat de culture (3) est mélangé à du compost, de la terre végétale et/ou de la tourbe, ainsi qu'à au moins un additif comme de la chaux, de l'engrais et/ou du sable, pour produire le terreau pour fleurs ou plantes.
